# EUROPEAN PATENT SPECIFICATION

(11) **EP 0 711 714 B1**
(45) Date of publication and mention of the grant of the patent: **17.03.1999**
(21) Application number: 95203005.4
(22) Date of filing: 07.11.1995
(51) Int. Cl.: B65G 17/08, B65G 21/16

(54) **Improved chain conveyor having improved steadiness and slide features**
Kettenförderer mit verbesserten Festigkeits- und Gleiteigenschaften
Convoyeur à chaîne avec stabilité et guidage améliorés

(30) Priority: 08.11.1994 IT MI942255
(43) Date of publication of application: 15.05.1996
(73) Proprietor: REGINA SUD S.p.A., I-04010 Borgo S. Michele (Latina) (IT)
(72) Inventor: Coén, Daniele, I-20058 Villasanta (Milano) (IT); Garbagnati, Carlo, I-22040 Castello Brianza (Como) (IT)
(74) Representative: Faraggiana, Vittorio, Dr. Ing.

(56) References cited:
- EP-A- 0 480 863
- EP-A- 0 493 349
- GB-A- 1 256 590
- US-A- 5 335 768

## Description

The present invention relates to a chain conveyor installation and, in particular, to an innovatory accomplishment of links for a chain conveyor and to the related travel guide.

In the known art conveyors are well known which comprise a plurality of interconnected links to define an articulated transportation plane running along appropriate guides.

Each link comprises a transversely-extended plate the upper portion of which embodies the transportation plane and from the lower part of which a central portion or articulation body projects. The guide has a corresponding U-shaped section to define a central channel within which the articulation bodies pivoted on each other run, whereas the upper link plates rest and slide on the upper ends of the U arms.

The central body in the links usually has pairs of oppositely-directed teeth to be fitted under corresponding ribs present in the guide and projecting inwardly of the channel. In this manner the links are forced to slide along the guide but cannot move away from said guide due to the engagement between the teeth and the ribs. Said engagement is above all necessary on the curved portions of the conveyor. In fact, in such portions the chain traction gives rise to tilting forces tending to incline the transportation plane formed by the links inwardly of the curve.

In spite of the presence of the teeth, the links do not remain on a flat level due to the play between the teeth and the guide. In currently used links, these plays cannot be reduced both because fitting problems are to be avoided and because unavoidable allowances are present, due to molding of the links made of plastic material, thermoplastic resins for example. Even a relatively small vertical play between the teeth and the guide channel is widened by the arm formed by the sliding side projections of the transportation plane of the link.

Therefore on a bend the transportation plane is not steady and undergoes strong oscillations that can impair the steadiness of the carried products. In addition, in the case of transportation planes formed of several chain conveyors disposed side by side, unavoidable differences in height are formed between the transportation planes, which brings about jamming of the carried products.

The link wear at the points of maximum friction consisting of the reaction areas between the teeth and the channel further increases plays, thereby worsening the conveyor steadiness in time. On the other hand, for economical reasons, the links cannot be made of materials having particularly high mechanical features as regards high resistance to wear and high smoothness.

In most traditional conveyors having teeth directed outwardly of the link, so as to form an inverted T for fitting into a mating channel in the guide, there is also the further disadvantage that the links can be disassembled from the guide only by making them slip off along the sliding direction of the conveyor. Thus replacement even of a single broken or worn out link for example, involves slipping off of all the conveyor links.

It is a general object of the present invention to obviate the above mentioned drawbacks by providing chain conveyors the links of which can be easily and cheaply manufactured and assembled while at the same time ensuring high steadiness qualities above all on curves, enable disassembling without a complete slipping off being necessary, and also have improved qualities in terms of smoothness and resistance to wear.

In view of the above object, in accordance with the invention, a link for a chain conveyor running along a guide has been devised which comprises an upper transportation plane and transverse housings to receive pivot pins for hinging with other similar links so as to form a chain conveyor, the link further comprising, below the transportation plane, at least one surface resting and sliding on the guide and teeth projecting towards each other in a direction transverse to the link so as to define a passageway therebetween for receiving at least part of the guide, the teeth being designed to be fitted under corresponding projections of said at least part of the guide so as to form a slidable engagement along the guide itself, characterized in that the teeth are located close to the side ends of the link so as to comprise said support and slide surface between them.

According to the invention, a guide segment for a chain conveyor formed of a plurality of links articulated with each other to define an upper transportation plane has been also devised, the guide segment comprising, at the upper part thereof, at least one slide and support surface for the links moving along it and at least one laterally-directed projection designed to be interfitted with teeth projecting from the lower part of the links to slidably engage said teeth with the segment, characterized in that the projection laterally juts out of a body portion of the guide segment defining the slide surface at the top, said body portion being designed to be received in a link passageway between the projecting teeth.

Still in accordance with the invention, a chain conveyor installation has been devised which comprises a guide defining, at the upper part thereof, at least one support and slide surface for a plurality of links which are hinged with each other to define an upper transportation plane, the links being provided, below the transportation plane, with at least one surface resting and sliding on the guide and teeth projecting towards each other in a direction transverse to the link to define a passageway therebetween for receiving at least part of the guide, the teeth being designed to be fitted under a corresponding projection of the guide at least along stretches of the installation path of travel, so as to constitute a slidable engagement along the guide, characterized in that the teeth are located close to side ends of the links so as to comprise said support and slide surface between them.

For better explaining the innovatory principles of the present invention and the advantages it offers over the known art, a possible embodiment applying said principles is described hereinafter by way of non-limiting example, with the aid of the accompanying drawings, in which:

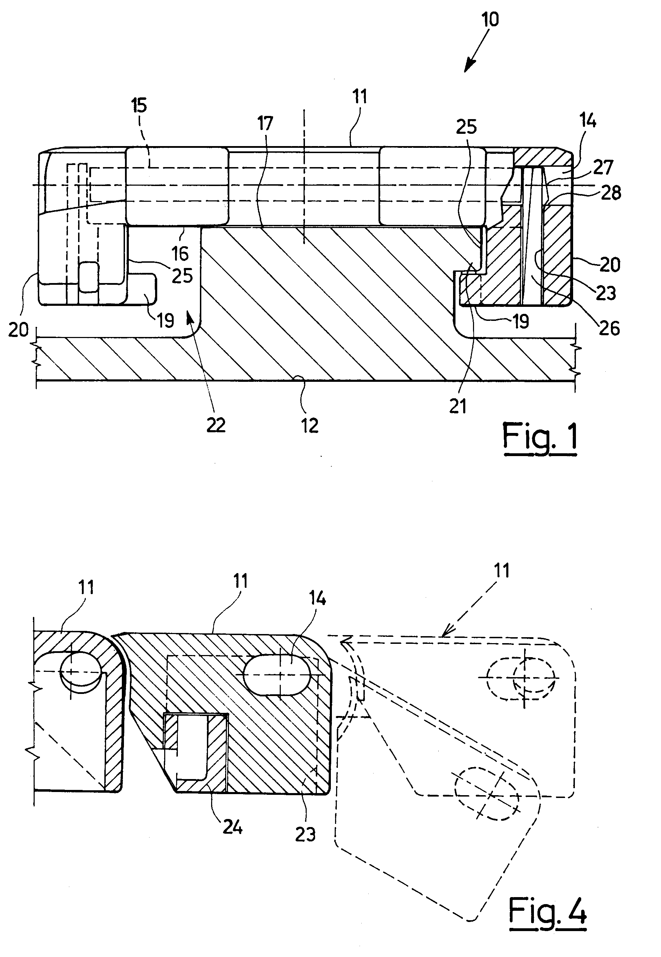

- Fig. 1 is a view, taken in a plane transverse to the carrying direction, of a link according to the invention and sliding on a respective guide;
- Fig. 1 is a partial top plan view, partly in section, of conveyor links according to the invention;
- Fig. 3 is a bottom plan view of a link as shown in Fig. 2;
- Fig. 4 is a side view of the links, partly sectioned along line IV-IV in Fig. 2.

Referring to the drawings, a transportation installation 10 according to the invention comprises a plurality of links 11 hinged with each other to form a chain conveyor.

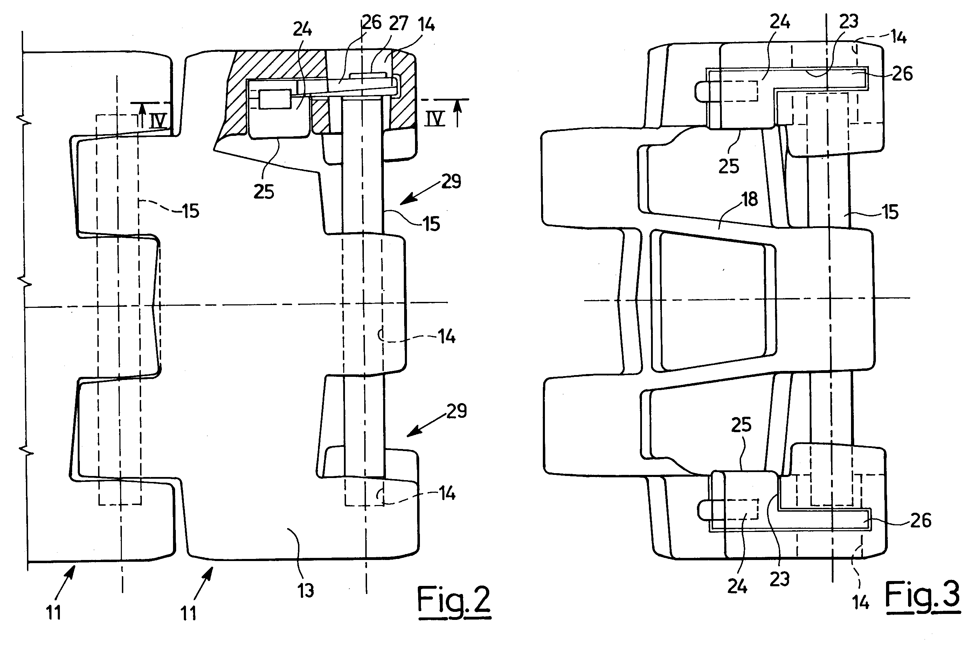

As clearly shown in Fig. 2 too, each link is comprised of an upper transportation plane 13 and transverse housings 14 to receive pivot pins 15 for hinging with similar links. Each link further comprises, below the transportation plane, at least one surface 16 for resting and sliding on a corresponding upper support surface 17 of the guide 12.

Obviously, by "resting surface" it is herein also intended a plurality of discontinuous resting elements defining a generic resting and sliding plane, such as ribs 18 for example, as shown in Fig. 3.

The link 11, close to its side ends, comprises blocks 20 projecting downwardly to define a passageway 22 between them for receiving at least part of the guide so that the support and slide surface 17 is comprised within said passageway.

Projecting from blocks 20 are corresponding teeth 19 facing each other and directed towards each other in a direction transverse to the link. Over at least some stretches thereof the guide, on its body portion received in the passageway 22 and defining the slide surface 17 by its upper side, comprises one side projection 21 under which the teeth will fit so as to form a slidable engagement along the guide.

Advantageously the guide segment comprising the projection is a segment of a curve and the projection is disposed on the external side of the bending, so that it engages the tooth 19 located on this side. In this manner the tilting torque generated by the conveyor traction on curves is counteracted.

Since the coupling area between the guide and the link is close to the side end of the link, there is a weak play between the link tooth and the guide projection so that only very little vertical movements of the link are allowed. As a result the transportation plane does not tilt to a great degree when running on a bend.

As clearly viewed from Fig. 1, by making the transverse size of the guide portion received in passageway 22 (inclusive of the side projection 19) smaller than the distance between the facing ends of the teeth 19, disengagement between teeth and projections is possible by mere lateral displacement between links and guide. Thus the conveyor can be lifted from the guide for servicing without being it necessary to separate the links from each other.

As shown in Fig. 2, for an easy manufacture of the link by moulding, the teeth 19 are disposed below the transportation plane 13 at a position facing breaks in said transportation surface. As a result, the teeth are made without producing undercuts, moulding of which is difficult and complicated.

Said breaks correspond to advantage to spaces 29 opened in the pin housings and designed to receive conformed articulation portions belonging to other links, as it clearly appears from Fig. 2 showing two hinged links 11.

Advantageously, seatings 23 are present in the side walls of passageway 22, that is the inner surfaces of blocks 20; said seatings 23 receive elements or inserts 24 slightly projecting into the passageway 22, so as to form side sliding surfaces 25 of the links on the guide. It has been noticed in fact that the greatest cause for friction and wear in chain conveyors is represented by the high specific pressures generated at lateral slide contact points while the conveyors are travelling on curves.

Elements 24 can be made of a material having high smoothness and/or wear resistance qualities, so that the convenyor performance is greatly improved.

In addition, inserts 24 can be secured to the link in a removable manner, by appropriate snap fitting for example, so that they can be easily replaced when worn.

As clearly shown in Figs. 2 and 3, the sliding elements 24 can be provided to advantage with plugging portions 26 capable of closing the housings 14 for introducing the pins between the links, so that slipping off of the pins from said housings 14 is prevented. Thus inserts 24 perform a dual function, as they offer sliding surfaces and locking means for the pivot pins.

As viewed from Fig. 3, for an easy and safe positioning of the inserts, seatings 23 are open downwardly of the link for introduction of the sliding elements in a direction transverse to the pin extension, said seatings transversely intersecting the pin housings 14. In this manner, the locking force of the insert in the seating has not to counteract possible axial sliding forces of the respective pin. Thus the fitting system between the insert and the seating can be of low force and therefore can be easily managed for assembling and disassembling. For example, as shown in Fig. 1, the sliding elements 24 can have teeth 27 for locking in the seatings 23, into which teeth an edge 28 formed by the intersection between the seating and the respective pin housing 14 is snap fitted.

For easy introduction of the insert, each tooth 27 can taper in the fitting direction.

At this point it is apparent that the intended purposes have been achieved, since there is provided a transportation installation having links of high steadiness and smoothness and capable of being easily assembled and disassembled. With the links of the invention it is for example possible to make conveyors consisting of several side-by-side lanes without the occurrence of differences in height between the transportation planes. In addition, the possibility of a free side sliding between the links of side-by-side lanes is allowed.

Obviously, the above description applying the innovatory principles of the invention is given for purposes of illustration only and therefore must not be considered as a limitation of the scope of the invention as herein claimed.

For example, the exact shape and proportion of the different elements will depend on the particular practical requirements.

In addition, fitting projections may be provided on both sides of the guide.

## Claims

1. A link (11) for a chain conveyor running along a guide (12) comprising an upper transportation plane (13) and transverse housings (14) to receive pivot pins (15) for hinging with other similar links so as to form a chain conveyor, the link further comprising, below the transportation plane (13), at least one surface (16) resting and sliding on the guide and teeth (19) projecting towards each other in a direction transverse to the link so as to define a passageway (22) therebetween for receiving at least part of the guide, the teeth (19) being designed to be fitted under corresponding projections (21) of said at least part of the guide so as to form a slidable engagement along the guide itself, characterized in that the teeth (19) are located close to the side ends of the link so as to comprise said support and slide surface between them.

2. A link according to claim 1, characterized in that it comprises seatings (23) disposed in the side walls of the passageway (22) and into which sliding elements (24) are received which embody side sliding surfaces (25) of the link along the guide.

3. A link according to claim 2, characterized in that the sliding elements (24) are comprised of plugging portions (26) for closing the ends of the pin-receiving housings (14), so as to prevent the pins from slipping off the housings.

4. A link according to claim 2, characterized in that the seatings (23) are open at the lower part of the link for introduction of the sliding elements (24) thereinto, in a direction transverse to the pin (15) extension.

5. A link according to claim 4, characterized in that the seatings (23) intersect the pin housings (14) in a transverse direction.

6. A link according to claim 5, characterized in that the sliding elements (24) have clamping teeth (27) for locking into the seatings (23), into which teeth an edge (28) formed by the intersection between the seating (23) and the respective pin housing (14) is snap fitted.

7. A link according to claim 1, characterized in that the teeth (19) are disposed below the transportation plane (13) at a position facing breaks (29) in said transportation surface.

8. A link according to claim 7, characterized in that the breaks (29) correspond to spaces opened in the pin housings and designed to receive hinging portions belonging to other links.

9. A guide segment (12) for a chain conveyor formed of a plurality of links (10) articulated with each other to define an upper transportation plane (11), the guide segment comprising, at the upper part thereof, at least one slide and support surface (17) for the links moving along it and at least one laterally-directed projection (21) designed to be interfitted with teeth (19) projecting from the lower part of the links to slidably engage said teeth with the segment, characterized in that the projection (21) laterally juts out of a body portion of the guide segment defining the slide surface (17) at its top, said body portion being designed to be received in a link passageway (22) between the projecting teeth (19).

10. A guide segment according to claim 9, characterized in that it has a curved extension, said side projection (21) being disposed on the external side of the curve.

11. A chain conveyor installation comprising a guide (12) defining, at the upper part thereof, at least one support and slide surface (17) for a plurality of links (11) which are hinged with each other to define an upper transportation plane (13), the links being provided, below the transportation plane (13), with at least one surface (16) resting and sliding on the guide and teeth (19) projecting towards each other in a direction transverse to the link to define a passageway (22) therebetween for receiving at least part of the guide, the teeth being designed to be fitted under a corresponding projection (21) of the guide at least along stretches of the installation path of travel, so as to constitute a slidable engagement along the guide, characterized in that the teeth (19) are located close to side ends of the links so as to comprise said support and slide surface (17) between them.

12. An installation according to claim 11, characterized in that the links are formed with seatings (23) in the side walls of the passageway (22), which seatings receive elements (24) that form side sliding surfaces of the links on the guide, at least in said stretches of the installation path of travel.

13. An installation according to claim 12, characterized in that the links are hinged with each other by means of pins (15), the sliding elements (24) embodying plugging portions (26) for closing the pin-receiving housings (14), so as to prevent the pins (15) from slipping off their housings.

14. An installation according to claim 11, characterized in that the transverse size of the guide portion received in the passageway (22), inclusive of at least one side projection (21), is smaller than the distance between the faced ends of the teeth (19), so that disengagement between the teeth and the projection is allowed by side displacement between the links and the guide.

15. An installation according to claim 11, characterized in that said stretches of the installation path of travel have a curved extension, said side projection (21) being disposed on the external side of the bending.

## Patentansprüche

1. Kettenglied (11) für einen Kettenförderer, das an einer Führung (12) entlangläuft und eine obere Transportebene (13) sowie Queraufnahmen (14) zur Aufnahme von Schwenkbolzen (15) zur gelenkigen Verbindung mit weiteren entsprechenden Kettengliedern aufweist, um auf diese Weise den Kettenförderer zu bilden, wobei das Kettenglied unter der Transportebene (13) weiterhin zumindest eine Fläche (16), die auf der Führung aufliegt und gleitet sowie Zähne (19) aufweist, die in einer Richtung quer zum Kettenglied einander zugewandt herausragen und auf diese Weise zwischen sich einen Laufgang (22) zur Aufnahme zumindest eines Teiles der Führung begrenzen, wobei die Zähne (19) derart konstruiert sind, daß sie unter entsprechenden Vorsprüngen (21) zumindest eines Teiles der Führung eingepaßt werden können und somit einen Gleiteingriff entlang der Führung selbst bilden, dadurch gekennzeichnet, daß die Zähne (19) dicht an den Seitenenden des Kettengliedes angeordnet sind und somit die Auflage- und Gleitfläche zwischen sich aufnehmen.

2. Kettenglied nach Anspruch 1, dadurch gekennzeichnet, daß es in den Seitenwänden des Laufganges (22) angeordnete Paßflächen (23) aufweist, in welchen Gleitelemente (24) aufgenommen werden, welche die seitlichen Gleitflächen (25) des Kettengliedes an der Führung entlang bilden.

3. Kettenglied nach Anspruch 2, dadurch gekennzeichnet, daß die Gleitelemente (24) von Pfropfenbereichen (26) zum Verschließen der Enden der Bolzenaufnahmen (14) umschlossen sind, so daß die Bolzen daran gehindert werden, aus den Aufnahmen herauszugleiten.

4. Kettenglied nach Anspruch 2, dadurch gekennzeichnet, daß die Paßflächen (23) im unteren Teil des Kettengliedes zur Einführung der Gleitelemente (24) in einer Richtung quer zur Verlängerung des Bolzens (15) offen sind.

5. Kettenglied nach Anspruch 4, dadurch gekennzeichnet, daß die Paßflächen (23) die Bolzenaufnahmen (14) durchdringen.

6. Kettenglied nach Anspruch 5, dadurch gekennzeichnet, daß die Gleitelemente (24) Klemmzähne (27) zum Einrasten in die Paßflächen (23) aufweisen, in welche die Zähne mit einer durch die Durchdringung zwischen der Paßfläche (23) und der jeweiligen Bolzenaufnahme (14) gebildeten Kante (28) einrasten.

7. Kettenglied nach Anspruch 1, dadurch gekennzeichnet, daß die Zähne (19) unterhalb der Transportebene (13) in Positionen angeordnet sind, die Durchbrüchen (29) in der Transportebene zugewandt sind.

8. Kettenglied nach Anspruch 7, dadurch gekennzeichnet, daß die Durchbrüche (29) den offenen Bereichen in den Bolzenaufnahmen entsprechen und derart konstruiert sind, daß sie den Gelenkteil des anderen Kettengliedes aufnehmen.

9. Führungssegment (12) für einen Kettenförderer aus einer Vielzahl gelenkig untereinander verbundener Kettenglieder (11) zur Definition der oberen Transportebene (13), wobei das Führungssegment an seinem oberen Teil zumindest eine Gleit- und Auflagefläche (17) für die dort entlang bewegten Kettenglieder sowie zumindest einen seitlich gerichteten Vorsprung (21) aufweist, der zum paßfähigen Eingriff mit den Zähnen (19) aus dem unteren Teil der Kettenglieder herausragt, um mit einem Segment gleitend an den Zähnen anzuliegen, dadurch gekennzeichnet, daR der Vorsprung (21) seitlich aus dem Grundkörper des Führungssegmentes herausragt und an seiner Oberseite die Gleitfläche (17) begrenzt, wobei der Grundkörper derart ausgebildet ist, daß er in dem Kettenglied-Laufgang (22) zwischen den vorspringenden Zähnen (19) aufgenommen wird.

10. Führungssegment nach Anspruch 9, dadurch gekennzeichnet, daß es einen gekrümmten Außenbereich hat und der Vorsprung (21) an der Außenseite der Krümmung angeordnet ist.

11. Kettenförderer-Anordnung mit einer Führung (12), die in ihrem oberen Teil zumindest eine Auflage- und Gleitfläche (17) für eine Vielzahl von Kettengliedern (11) definiert, die untereinander gelenkig verbunden sind, um eine obere Transportebene (13) zu definieren, wobei die Kettenglieder unter der Transportebene (13) zumindest eine Fläche (16), die auf der Führung aufliegt und gleitet sowie Zähne (19) aufweist, die in einer Richtung quer zum Kettenglied einander zugewandt herausragen und auf diese Weise zwischen sich einen Laufgang (22) zur Aufnahme zumindest eines Teiles der Führung begrenzen, wobei die Zähne derart konstruiert sind, daß sie unter einem entsprechenden Vorsprung (21) der Führung zumindest entlang der Verlängerung der Bahn der Anordnung eingepaßt werden können und somit einen Gleiteingriff entlang der Führung selbst bilden, dadurch gekennzeichnet, daß die Zähne (19) dicht an den Seitenenden der Kettenglieder angeordnet sind und somit die Auflage- und Gleitfläche (17) zwischen sich aufnehmen.

12. Anordnung nach Anspruch 11, dadurch gekennzeichnet, daß die Kettenglieder mit in den Seitenwänden des Laufganges (22) angeordneten Paßflächen (23) versehen sind, in welchen Elemente (24) aufgenommen werden, welche zumindest in der Verlängerung der Bahn der Anordnung die Gleitflächen des Kettengliedes auf der Führung bilden.

13. Anordnung nach Anspruch 12, dadurch gekennzeichnet, daß die Kettenglieder mittels Bolzen (15) gelenkig miteinander verbunden sind, wobei Gleitelemente (24) Pfropfenbereiche (26) zum Verschließen der Bolzenaufnahmen (14) aufweisen, so daß die Bolzen (15) daran gehindert werden, aus ihren Aufnahmen herauszugleiten.

14. Anordnung nach Anspruch 11, dadurch gekennzeichnet, daß die Querabmessung des in dem Laufgang (22) aufgenommenen Führungsteiles einschließlich zumindest eines seitlichen Vorsprunges (21) kleiner ist als der Abstand zwischen den abgeschrägten Enden der Zähne (19), so daß durch eine seitliche Verschiebung zwischen den Kettengliedern und der Führung die Vorsprünge und die Zähne außer Eingriff gebracht werden können.

15. Anordnung nach Anspruch 11, dadurch gekennzeichnet, daß die Verlängerungen des Bahn der Anordnung einen gekrümmten Außenbereich haben, wobei die seitlichen Vorsprünge (21) an der Außenseite der Krümmung angeordnet sind.

## Revendications

1. Maillon (11) destiné à un transporteur à chaîne circulant le long d'une glissière (12), comprenant un plan supérieur de transport (13) et des logements transversaux (14) destinés à recevoir des axes de pivotement (15) afin de l'articuler avec d'autres maillons semblables de manière à former un transporteur à chaîne, ledit maillon comprenant en outre, au-dessous du plan de transport (13), au moins une surface (16) reposant et glissant sur la glissière, et des dents (19) s'étendant l'une vers l'autre suivant une direction transversale au maillon de manière à définir un passage (22) entre celles-ci destiné à recevoir au moins une partie de la glissière, les dents (19) étant conçues pour s'ajuster sous des saillies correspondantes (21) de ladite au moins une partie de la glissière, de manière à former un engagement pouvant coulisser le long de la glissière elle-même, caractérisé en ce que les dents (19) sont disposées près des extrémités latérales du maillon de manière à comprendre ladite surface de support et de glissement entre elles.

2. Maillon selon la revendication 1, caractérisé en ce qu'il comprend des logements (23) agencés dans les parois latérales du passage (22) et dans lesquels sont reçus des éléments de glissement (24) qui composent les surfaces de glissement latérales (25) du maillon le long de la glissière.

3. Maillon selon la revendication 2, caractérisé en ce que les éléments de glissement (24) comprennent des parties d'obturation (26) destinées à obturer les extrémités des logements de réception d'axe (14), de manière à empêcher les axes de glisser hors des logements.

4. Maillon selon la revendication 2, caractérisé en ce que les logements (23) sont ouverts au niveau de la partie inférieure du maillon en vue de l'introduction des éléments de glissement (24) dans ceux-ci, suivant une direction transversale à l'étendue de l'axe (15).

5. Maillon selon la revendication 4, caractérisé en ce que les logements (23) recoupent les logements d'axe (14) suivant une direction transversale.

6. Maillon selon la revendication 5, caractérisé en ce que les éléments de glissement (24) comportent des dents de serrage (27) afin de les verrouiller dans les logements (23), dents sur lesquelles une arête (28) formée par l'intersection entre le logement (23) et le logement d'axe respectif (14) vient s'encliqueter.

7. Maillon selon la revendication 1, caractérisé en ce que les dents (19) sont disposées au-dessous du plan de transport (13) en un emplacement en regard d'interruptions (29) de ladite surface de transport.

8. Maillon selon la revendication 7, caractérisé en ce que les interruptions (29) correspondent à des espaces ouverts dans les logements d'axe, et conçus pour recevoir des parties d'articulation appartenant à d'autres maillons.

9. Segment de glissière (12) destiné à un transporteur à chaîne formé d'une pluralité de maillons (11) articulés l'un avec l'autre afin de définir un plan supérieur de transport (13), le segment de glissière comprenant, à la partie supérieure de celui-ci, au moins une surface de glissement et de support (17) destinée aux maillons se déplaçant le long de celui-ci, et au moins une saillie orientée latéralement (21) conçue pour s'interengager avec des dents (19) faisant saillie depuis la partie inférieure des maillons, de manière à engager lesdites dents avec le segment avec possibilité de glissement, caractérisé en ce que la saillie (21) dépasse latéralement d'une partie de corps du segment de glissière qui définit la surface de glissement (17) à son sommet, ladite partie de corps étant conçue pour être reçue dans un passage du maillon (22) entre les dents saillantes (19).

10. Segment de glissière selon la revendication 9, caractérisé en ce qu'il présente une étendue incurvée, ladite saillie latérale (21) étant disposée sur la face externe de la courbe.

11. Installation de transporteur à chaîne comprenant une glissière (12) définissant, à la partie supérieure de celle-ci, au moins une surface de support et de glissement (17) destinée à une pluralité de maillons (11) qui sont articulés l'un avec l'autre afin de définir un plan supérieur de transport (13), les maillons étant munis, audessous du plan de transport (13), d'au moins une surface (16) reposant et glissant sur la glissière, et de dents (19) faisant saillie l'une vers l'autre suivant une direction transversale au maillon, afin de définir un passage (22) entre elles destiné à recevoir au moins une partie de la glissière, lesdites dents étant conçues pour s'ajuster sous une saillie correspondante (21) de la glissière au moins le long de tronçons du trajet de déplacement de l'installation, de manière à constituer un engagement pouvant coulisser le long de la glissière, caractérisée en ce que les dents (19) sont placées près des extrémités latérales des maillons de manière à comprendre ladite surface de support et de glissement (17) entre elles.

12. Installation selon la revendication 11, caractérisée en ce que les maillons sont formés avec des logements (23) dans les parois latérales du passage (22), lesquels logements reçoivent des éléments (24) qui forment des surfaces latérales de glissement des maillons sur la glissière, au moins dans lesdits tronçons du trajet de déplacement de l'installation.

13. Installation selon la revendication 12, caractérisée en ce que les maillons sont articulés l'un avec l'autre au moyen d'axes (15), les éléments de glissement (24) comprenant des parties d'obturation (26) destinées à obturer les logements de réception d'axe (14), de manière à empêcher les axes (15) de glisser hors de leurs logements.

14. Installation selon la revendication 11, caractérisée en ce que la dimension transversale de la partie de la glissière reçue dans le passage (22), y compris au moins une saillie latérale (21), est inférieure à la distance entre les extrémités en regard des dents (19), de sorte qu'une désolidarisation entre les dents et la saillie est permise par un déplacement latéral entre les maillons et la glissière.

15. Installation selon la revendication 11, caractérisée en ce que lesdits tronçons du trajet de déplacement de l'installation présentent une étendue incurvée, ladite saillie latérale (21) étant disposée sur la face externe de la courbure.
